# EUROPÄISCHE PATENTSCHRIFT

(11) **EP 2 027 372 B1**
(45) Veröffentlichungstag und Bekanntmachung des Hinweises auf die Patenterteilung: **26.01.2011**
(21) Anmeldenummer: 07725742.6
(22) Anmeldetag: 01.06.2007
(51) Int. Cl.: F01N 3/022

(54) **NEBENSTROMFILTER MIT VERBESSERTEM FILTERWIRKUNGSGRAD**
OFF-LINE FILTER WITH IMPROVED FILTER EFFICIENCY
FILTRE À FLUX SECONDAIRE AVEC RENDEMENT DE FILTRE AMÉLIORÉ

(30) Priorität: 02.06.2006 DE 102006026324
(43) Veröffentlichungstag der Anmeldung: 25.02.2009
(73) Patentinhaber: Emitec Gesellschaft für Emissionstechnologie mbH, 53797 Lohmar (DE); Toyota Motor Corporation, Toyota-shi, Aichi 471-8571 (JP)
(72) Erfinder: ALTHÖFER, Kait, 51674 Wiehl (DE)
(74) Vertreter: Rössler, Matthias
(86) Internationale Anmeldenummer: PCT/EP2007/004862
(87) Internationale Veröffentlichungsnummer: WO 2007/140932

(56) Entgegenhaltungen:
- WO-A-2006/072606
- DE-U1- 20 117 659
- DE-U1- 20 117 873

## Beschreibung

Die vorliegende Erfindung betrifft einen Nebenstromfilter, der eine Mehrzahl von Kanälen aufweist, die mit wenigstens einer strukturierten Wandlage und einer Filterlage gebildet sind. Der so genannte Nebenstromfilter ist von einem Filter zu unterscheiden, der wechselseitig vollständig verschlossene Kanäle aufweist. Besonderes Einsatzgebiet eines solchen Nebenstromfilters ist die Abgasnachbehandlung bei Kraftfahrzeugen.

Ein Nebenstromfilter geht beispielsweise aus dem deutschen Gebrauchsmuster Nr. 201 17 873 hervor, wobei der dort als "offen" beschriebene Filterkörper mit einer strukturierten Folie und einer glatten Filterlage ausgeführt ist. Die Folie weist eine Mehrzahl von Schaufeln mit einer Schaufelhöhe auf, welche jeweils einen Durchlass mit einem Schaufeleintritt und einem Schaufelaustritt ausbilden, wobei der Schaufeleintritt und der Schaufelaustritt in einem Winkel zueinander angeordnet sind. Das Besondere des dort beschriebenen Filterkörpers ist, dass die Schaufelhöhe zwischen 100 % und 60 % der Strukturhöhe beträgt, wobei eine Strömungsfreiheit von mindestens 20 % gewährleistet ist. Der Hinweis auf eine Strömungsfreiheit veranschaulicht, dass es sich hierbei nicht um ein geschlossenes Filterkonzept handelt, sondern ein Nebenstrom ermöglicht wird. Bezüglich der Ausgestaltung der Schaufeln wird weiterhin offenbart, dass diese vorteilhafter Weise wechselseitig und gleichgerichtet auszuführen sind. Wechselseitig bedeutet, dass die Schaufeln in benachbarten Struktur-Extrema positioniert sind, wobei sie zu unterschiedlichen Seiten der Folie hin vorstehen. Gleichgerichtet in diesem Sinne bedeutet, dass die Durchlass-Öffnungen der Schaufeln alle in die gleiche axiale Richtung des Filterkörpers weisen.

Gemäß einer Weiterbildung dieses Filterkörpers, wie sie in der WO 2005/099867 A1 beschrieben ist, soll das Anströmen der Schaufeln vorteilhafterweise über die schräg stehende Leitschaufel erfolgen. Dies hat insbesondere Auswirkungen auf einen reduzierten Druckverlust des Filterkörpers beim Durchströmen mit Abgasen in mobilen Verbrennungskraftanlagen.

Aus dem deutschen Gebrauchsmuster Nr. 201 17 659 gehen zudem offene Partikelfilter hervor, die mit strukturierten Metallfolien und Filterlagen gebildet sind. Mit Hilfe der Struktur der Metallfolien werden mit einem Fluid durchströmbare Kanäle gebildet. Weiterhin sind die Metallfolien mit Durchlässen und Leitschaufeln versehen, wobei die Leitschaufeln benachbarter Kanäle in Strömungsrichtung versetzt sind und Anströmflächen mit unterschiedlicher Ausrichtung aufweisen.

Mit den hier vorgestellten Filterkörpern lassen sich bereits beachtliche Umsatzrate verwirklichen, wobei gleichzeitig ein geringer Druckverlust feststellbar ist. Gleichwohl soll eine gesteigerte Effektivität eines solchen Nebenstromsfilters gerade im Hinblick auf zukünftige Gesetzgebungen angestrebt werden. Dabei soll gleichzeitig der Vorteil des geringeren Druckverlustes gegenüber den geschlossenen Systemen aufrechterhalten werden.

Hier von ausgehend ist es Aufgabe der vorliegenden Erfindung, einen Nebenstromfilter anzugeben, der die bezüglich des Standes der Technik veranschaulichten technischen Probleme zumindest teilweise löst bzw. minimiert. Insbesondere soll ein Nebenstromfilter angegeben werden, der eine verbesserte Effektivität im Hinblick auf die Umsetzung von in einem Abgas enthaltenen Schadstoffen bewirkt, wobei gerade das Zurückhalten und gegebenenfalls Oxidieren von im Abgasstrom enthaltenen Partikeln verbessert werden soll. Gleichzeitig soll eine kostengünstige Fertigung des Nebenstromfilters beibehalten werden, wobei der Nebenstromfilter auch den hohen thermischen und dynamischen Beanspruchungen im Abgassystem mobiler Verbrennungskraftmaschinen dauerhaft standhalten soll. Diese Aufgaben werden gelöst mit einem Nebenstromfilter gemäß den Merkmalen des Patentanspruchs 1. Vorteilhafte Ausgestaltungen bzw. Anwendungen sind in den jeweils abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen.

Der Nebenstromfilter weist eine Mehrzahl nebeneinander angeordneter Kanäle auf, wobei die Kanäle mit wenigstens einer strukturierten Wandlage und einer Filterlage gebildet sind. Dabei sind in zumindest der Mehrzahl der Kanäle Leitschaufeln zur Ausbildung eines Staudrucks im vorgelagerten Kanalbereich mit einer Anströmfläche und jeweils mit der Wandlage gebildete Durchlässe zum Entweichen von Teilabgasströmen in einen benachbarten Kanal und zum vorbeiströmen von den Teilabgasströmen an der Filterlage hin zum benachbarten Kanal vorgesehen. Dieser Nebenstromfilter zeichnet sich dadurch aus, dass in benachbarten Kanälen. die über Durchlässe miteinander verbunden sind, in Strömungsrichtung zueinander versetzte Leitschaufeln mit der gleichen Ausrichtung der Anströmflächen angeordnet sind.

Mit einem Nebenstromfilter ist insbesondere ein solcher Filterkörper gemeint, bei dem dem behandelten Gasstrom die Möglichkeit eröffnet wird, (theoretisch) entlang eines Weges dort hindurch zu strömen, ohne durch eine Filterlage hindurch zu treten. Damit verfolgt der Nebenstromfilter ein anderes Konzept als der klassische "geschlossene" Filter, bei dem die Kanäle hin zu einer Seite vollständig verschlossen sind und so zwangsläufig der gesamte Abgasstrom durch eine poröse Wand hindurch strömen muss. Hier wird z.B. von dem Gedanken ausgegangen, dass der Nebenstromfilter grundsätzlich separate Kanäle aufweist, die jedoch miteinander kommunizieren können bzw. in Strömungsaustausch stehen. Für eine solche Ausgestaltung eines Nebenstromfilters sind Durchlässe hin zu benachbarten Kanälen ausgebildet. Diese Durchlässe werden regelmäßig mit der Wandlage gebildet, wobei dies einerseits mittels Durchbrechungen der Wandlage und/oder auch Deformierungen der Wandlage erreicht werden kann.

Die strukturierte Wandlage ist vorteilhafter Weise aus einem gasundurchlässigen Material, beispielsweise Metall oder Keramik, wobei eine metallische Wandlage bevorzugt ist. Für diesen Fall, dass diese Wandlage aus einem Metall gefertigt ist, handelt es sich bevorzugt um eine zumindest teilweise gewellte Metallfolie. Bei der Filterlage wird ein Drahtgestrick (wie beispielsweise ein Faservlies oder dergleichen) bevorzugt, wobei dies vorteilhafter Weise aus dem gleichen oder unter Umständen auch aus einem ähnlichen Material gefertigt ist wie die Wandlage. Bei einem nicht-spiralförmigen Aufbau des Filterkörpers werden regelmäßig mehrere Wandlagen und mehrere Filterlagen so zueinander angeordnet, dass diese zusammen jeweils eine Mehrzahl von Kanälen begrenzen. Diese Wandlagen und Filterlagen werden anschließend so aufgewickelt bzw. gewunden, dass Nebenstromfilter mit beliebigem Querschnitt in ein entsprechendes Gehäuse platziert werden können.

Innerhalb der Kanäle werden durch die Bereitstellung der Leitschaufeln Strömungshindernisse gebildet, so dass sich vor diesen Leitschaufeln ein Staudruck ausbildet. Dieser Staudruck führt dazu, dass ein beachtlicher Anteil des durch den Kanal strömenden Gasstroms durch eine Filterlage hindurchströmt. Dieser Staudruck löst sich dann auf, wenn dem Gasstrom die Möglichkeit des Ausweichens durch einen entsprechenden Durchlass hin zu einem Kanal mit einem geringem Druckniveau eröffnet wird.

Es wurde nun herausgefunden, dass die Ausgestaltung bzw. Orientierung des Durchlasses einen beachtlichen Effekt hinsichtlich der Reinigungswirkung hat. Deshalb wird hier erfindungsgemäß vorgeschlagen, dass die Durchlässe einen sich verjüngenden Querschnitt haben, wobei der sich verjüngende Anteil des Querschnitts hin zur benachbarten Leitschaufel ausgerichtet ist. Das bedeutet mit anderen Worten, dass der verjüngende Anteil des Querschnitts hin zu der Leitschaufel ausgebildet ist, die in der Nachbarschaft des Durchlasses den Staudruck aufbaut. Üblicherweise erstrecken sich die Durchlässe in Richtung der Kanäle über eine Wegstrecke von mehreren Millimetern. Bei den bislang bekannten Anordnungen wurde stets der größte Querschnitt zur Leitschaufel ausgerichtet. Dies führte zu einem abrupten Druckabbau, so dass im Bereich der Filterlage, die den benachbarten Kanalabschnitt überdeckt, keine Ansammlung von Partikeln wesentlichen Umfangs festgestellt werden konnte. Durch die umgekehrte Anordnung der Durchlässe in der Art, dass sich der Querschnitt vergrößert, führt dazu, dass auch noch die Filterlage im benachbarten Bereich zu den Leitschaufeln genutzt wird. Erste Tests haben gezeigt, dass hierbei bereits eine Effektivitätssteigerung von nahezu 10 % erreicht wird. Damit wird eine gleichmäßigere Auslastung der Filterlage erreicht und die Wahrscheinlichkeit, dass ein Teilabgasstrom ohne einmaligen Durchtritt durch die Filterlage hindurch den Nebenstromfilter passiert, weiter reduziert.

In diesem Zusammenhang ist es besonders vorteilhaft, dass der sich verjüngende Querschnitt eine Fläche von 0,8 mm² bis 18 mm² hat. Ganz besonders bevorzugt liegt die Fläche in einem Bereich von 1 mm² bis 7 mm² bei einer Kanalweite im Bereich von 1 mm bis 2,5 mm. Damit wird klar zum Ausdruck gebracht, dass es sich hierbei um eine relativ große Fläche handelt, die insbesondere nicht durch Verunreinigungen und/oder Partikel während des Betriebes zugesetzt werden kann. Damit ist gewährleistet, dass der Nebenstromfilter seine Eigenschaften hinsichtlich des geringen Druckverlustes dauerhaft auch bei ungünstigen Betriebsbedingungen aufrechterhält.

Hier wird nun des Weiteren charakterisiert, dass die Leitschaufeln eine Anströmfläche aufweisen. Die Anströmfläche ist im Wesentlichen zum Kanal bzw. zu dessen Kanalachse geneigt angeordnet. Hier wird nun vorgeschlagen, dass diese direkt zueinander versetzt angeordneten Leitschaufeln die gleiche Ausrichtung hinsichtlich der Anströmflächen aufweisen, wobei damit bevorzugt alle Leitschaufeln des Nebenstromfilters gemeint sind. Das meint mit anderen Worten zum Beispiel auch, dass die Anströmflächen mit im Wesentlichen dem gleichen Neigungswinkel zur Hauptströmungsrichtung des Abgases angeordnet sind. Dabei ist nicht zwingend erforderlich, dass alle Anströmflächen denselben Neigungswinkel aufweisen, jedoch sollten alle Anströmflächen entsprechend zur Hauptströmungsrichtung ausgerichtet sein. D. h. auch, dass diese Leitschaufeln regelmäßig so angeordnet sind, dass das anströmende Abgas bei einer betrachteten Leitschaufel auf den am weitesten in den Kanal hinein ragenden Bereich ("Flügel-Ende") der Anströmfläche auftrifft und bei der benachbarten Leitschaufel auf einen Bereich nahe der Wandlage zuerst auftrifft ("Fuß-Ende") oder umgekehrt (so genannte "alternierende Anordnung"). Eine solche Anordnung der Leitschaufeln mit einer Anströmfläche gleicher Ausrichtung führt dazu, dass die damit gebildeten Durchlässe einen sich verjüngenden Querschnitt aufweisen, wobei der sich verjüngende Anteil des Querschnitts hin zur benachbarten Leitschaufel ausgerichtet ist. Damit werden bei dieser konkreten Anordnung der Leitschaufeln die vorstehend beschriebenen positiven Effekte im Hinblick auf die Aufrechterhaltung des Staudrucks vor einer solchen Leitschaufel verwirklicht.

Gemäß einer vorteilhaften Weiterbildung sind die Durchlässe mit im benachbarten Kanal angeordneten Leitschaufeln aufweisend eine Anströmfläche gebildet, wobei die zueinander in Strömungsrichtung versetzten Leitschaufeln in benachbarten Extrema der Wandlage angeordnet sind. Dies heißt mit anderen Worten, dass (beispielsweise bei einer regelmäßigen Wellstruktur der Wandlage) die versetzt zueinander angeordneten Leitschaufeln in einem Wellenberg und einem benachbarten Wellental ausgebildet sind. Dabei erstrecken sich diese Leitschaufeln in vorteilhafter Weise in entgegengesetzte Richtungen, wobei die im Wellental angeordneten Leitschaufeln sich nach oben erstrecken und die im Wellenberg angeordneten Leitschaufeln nach unten. Infolge des Eindellens der Wellenlage in diesem Bereich bzw. zur Ausbildung der Leitschaufeln werden die Durchlässe mit einem sich verjüngenden Anteil des Querschnitts gebildet. Bevorzugt ist in diesem Zusammenhang eine Ausgestaltung, wobei die Leitschaufeln in den benachbarten Extrema im Wesentlichen symmetrisch zum jeweiligen Kanal ausgebildet sind, dies ist jedoch nicht zwingend erforderlich.

Einer Weiterbildung des Nebenstromfilters zufolge, bei der die Durchlässe mit Leitschaufeln aufweisend eine Anströmfläche gebildet sind, sind die Anströmflächen mit einem Winkel bis 45° zu einer Kanalachse ausgeführt. Besonders bevorzugt ist dabei ein Winkel der Anströmfläche im Bereich von 5° bis 20° bei einer Kanalweite bis zum Beispiel 2,5 mm. Der Winkel betrifft insbesondere die Neigung der Anströmfläche hin zur Strömungsrichtung des Abgases durch den Nebenstromfilter.

Des Weiteren wird auch vorgeschlagen, dass bei einem Nebenstromfilter, dessen Durchlässe mit Leitschaufeln aufweisend eine Anströmfläche gebildet sind, die Anströmflächen mit einer Länge von 3 mm bis 8 mm ausgeführt sind. Ganz besonders bevorzugt liegt die Länge der Anströmflächen im Bereich von 4 mm bis 6 mm.

Dabei ist klar, dass bei der Wahl der Winkel und der Länge der Anströmflächen der Leitschaufeln die Strukturhöhe bzw. -länge der Wandlage zu berücksichtigen ist. Regelmäßig wird von einer Wellhöhe bzw. Kanalweite im Bereich von 1 bis 5 mm auszugehen sein, insbesondere zwischen 1 und 2,5 mm. Bei der Auslegung ist demnach sicherzustellen, dass vorteilhafter Weise nicht der gesamte Querschnitt des Kanals mit einer solchen Leitschaufel verschlossen wird, wobei jedoch unter Berücksichtigung der Form der Leitschaufel sich diese auch über die gesamte Höhe der Wellung erstrecken kann.

Gemäß einer weiteren Ausgestaltung des Nebenstromfilters, wobei die Durchlässe mit Leitschaufeln aufweisend eine Anströmfläche gebildet sind, sind die Anströmflächen mit einer Höhe von 50 % bis 100 % der jeweiligen Kanalweite ausgeführt. Bevorzugt liegt die Höhe im Bereich von 70 bis 100 %.

Bei einem Nebenstromfilter, bei dem die Durchlässe mit Leitschaufeln aufweisend eine Anströmfläche gebildet sind, ist zudem vorteilhaft, dass die benachbarten Leitschaufeln mit einem Versatz in Richtung der Kanalachse von mindestens 10 mm ausgeführt sind. Dieser Versatz charakterisiert dabei im Wesentlichen auch den Teilbereich vor einer solchen Leitschaufel, in dem der gewünschte Staudruck aufrecht erhalten wird, so dass ein möglichst großer Anteil des dort entlang strömenden Abgases durch die Filterlage hindurchtritt. Besonders bevorzugt beträgt der Versatz zwischen 10 mm und 20 mm. Bei einem größeren Versatz kann nur eine reduzierte Anzahl von Leitschaufeln in einem solchen Kanal untergebracht werden, was unter Umständen wieder zu Effektivitätsverlusten führen kann.

Weiter wird vorgeschlagen, dass mindestens 6 Leitschaufeln in einem Kanal vorgesehen sind. Ganz besonders bevorzugt ist die Ausgestaltung mit mindestens 10 oder sogar 14 Leitschaufeln pro Kanal. Durch die Vorsehung einer genügend großen Anzahl von Leitschaufeln in einem Kanal kann die Wahrscheinlichkeit deutlich erhöht werden, dass das an der Filterlage vorbeiströmende Abgas bei der nächsten Möglichkeit durch die Filterlage hindurch gezwungen wird.

Gemäß einer Weiterbildung des Nebenstromfilters ist die strukturierte Wandlage eine Metallfolie und die Filterlage ein metallisches Drahtgestrick. Bezüglich der Metallfolie ist anzumerken, dass diese bevorzugt aus einem hochtemperaturfesten und korrosionsbeständigen Material besteht, das insbesondere die Legierungselemente Chrom und Aluminium umfasst. Das Drahtgestrick umfasst vorteilhafter Weise eine Mehrzahl von metallischen Fasern, die zu einem Gestrick (chaotisch oder geordnet) verbunden sind, insbesondere miteinander verschweißt.

Des Weiteren wird vorgeschlagen, dass mehrere Schichten umfassend eine Wandlage und eine Filterlage miteinander verbunden in einem Gehäuse angeordnet sind. Damit ist insbesondere eine S-förmige Anordnung der Schichten umfassend jeweils eine strukturierte Wandlage und eine im Wesentlichen glatte Filterlage gemeint. Gleichwohl können auch stapelförmige (geradlinig verlaufende) oder spiralförmige Anordnungen der Schichten sinnvoll sein, so dass die konkrete Ausgestaltung des Nebenstromfilters hier nicht eingeschränkt werden soll. Gleichwohl haben z.B. S-förmige oder stapelförmige Anordnungen den Vorteil, dass alle Enden der Schichten bzw. der Wandlagen und Filterlagen fügetechnisch mit dem Gehäuse verbunden werden können, beispielsweise verlötet oder verschweißt. Damit ist ein sicherer Zusammenhalt der Schichten untereinander sowie zwischen den Schichten und dem Gehäuse sichergestellt.

Weiterhin wird auch ein Nebenstromfilter vorgeschlagen, wobei zumindest ein Teilbereich wenigstens der Wandlage oder der Filterlage eine katalytisch aktive Beschichtung aufweist. Besonders bevorzugt ist dabei eine Ausgestaltung, wobei sowohl die Wandlage als auch die Filterlage in einem Teilvolumen des Nebenstromfilters mit einer katalytisch aktiven Beschichtung versehen sind. Die katalytisch aktive Beschichtung umfasst bevorzugt Edelmetall-Katalysatoren, die beispielsweise zur Oxidation von im Abgas enthaltenen Schadstoffkomponenten dienen. Solche Edelmetall-Katalysatoren sind beispielsweise Platin, Rhodium oder Palladium.

Als besonders bevorzugtes Einsatzgebiet eines solchen Nebenstromfilters wird die Abgasnachbehandlung von mobilen Verwandlungskraftmaschinen vorgeschlagen. Deshalb wird auch eine Abgasanlage eines Fahrzeugs aufweisend einen vorstehend erfindungsgemäß beschriebenen Nebenstromfilter vorgeschlagen, ebenso wie ein Fahrzeug aufweisend einen solchen Nebenstromfilter.

Die Erfindung sowie das technische Umfeld werden anhand der Figuren näher erläutert. Die Figuren zeigen dabei besonders bevorzugte Ausführungsvarianten der Erfindung, auf die diese jedoch nicht beschränkt ist. Es zeigen schematisch:
- **Fig. 1**: perspektivisch eine strukturierte Wandlage mit Leitschaufeln zur Bildung von Durchlässen
- **Fig. 2**: die in Fig. 1 veranschaulichte Wandlage mit einer Filterlage und diversen Teilabgasströmungen,
- **Fig. 3**: eine Schnittdarstellung einer weiteren Ausführungsform des Neben- stromfilters im Detail,
- **Fig. 4**: eine stirnseitige Ansicht eines Nebenstromfilters einer weiteren Ausfüh- rungsvariante,
- **Fig. 5**: eine Schnittdarstellung durch eine weitere Ausführungsvariante des er- findungsgemäßen Nebenstromfilters, und
- **Fig. 6**: ein Kraftfahrzeug mit einem Nebenstromfilter.

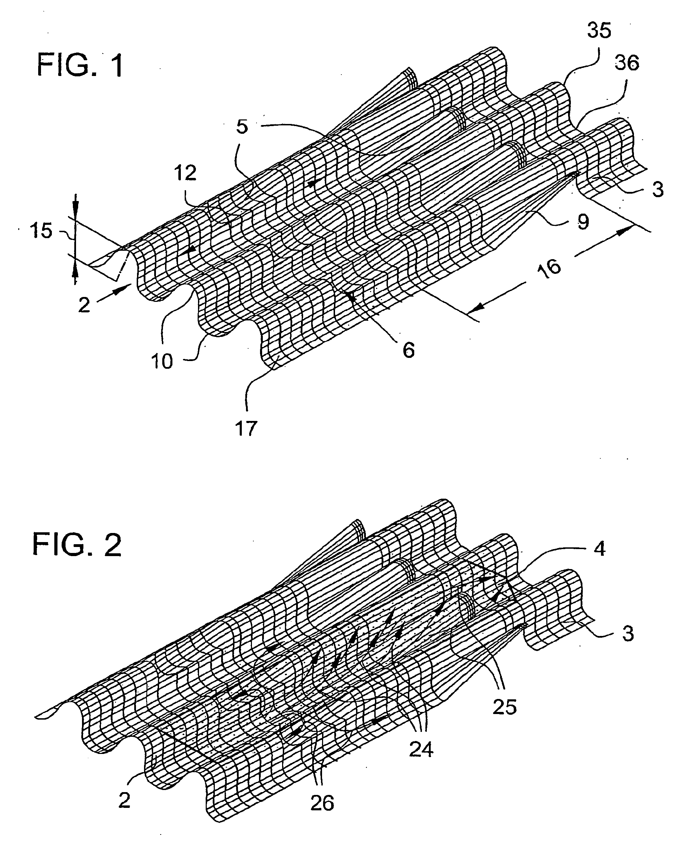

Fig. 1 zeigt schematisch und in einer perspektivischen Darstellung einen Abschnitt einer Wandlage 3, die mit einer Metallfolie 17 gebildet ist. Die Metallfolie 17 weist eine im Wesentlichen regelmäßige Wellform mit zueinander benachbart liegenden Extrema 10 auf, die hier nach Art eines Wellenberges 35 und eines Wellentals 36 ausgebildet sind. Diese Wellstruktur bzw. die Kanäle 2 sind mit einer Kanalweite 15 von im Wesentlichen gleichem Ausmaß ausgebildet. Die Kanäle 2 sind im Wesentlichen parallel zueinander ausgestaltet und erstrecken sich entlang einer Kanalachse 12.

Bei einer einfachen Wellstruktur würde das Abgas entlang der Kanäle 2 laminar hindurchströmen. Zur Umlenkung des durch die Kanäle 2 hindurch geführten Abgases ist es deshalb vorgesehen, dass eine Umlenkung mittels mehrerer Leitschaufeln 5 stattfindet. Bei der hier veranschaulichten Ausführungsvariante sind die Leitschaufeln 5, die in den Wellenbergen 35 angeordnet sind, nach unten eingedrückt, während die Leitschaufeln 5, die im Wesentlichen in den Wellentälern 36 angeordnet sind, nach oben ausgestülpt wurden. Die Form der Leitschaufeln 5 wird im Wesentlichen charakterisiert durch die Anströmfläche 9, wobei an deren Auslauf noch ein nahezu teilzylindrischer Abschnitt nach Art eines Kragens vorgesehen sein kann. Weitere Einzelheiten zur konkreten Gestaltung der Leitschaufeln können dem eingangs genannten deutschen Gebrauchsmuster Nr. 201 17 873 entnommen werden. Durch diese Leitschaufeln 5 wird ein Großteil des Querschnitts des Kanals 2 versperrt, so dass eine Umlenkung des dort hindurchströmenden Abgases erreicht wird. Die Leitschaufeln 5 stellen dabei einen Strömungswiderstand dar, so dass sich vor diesen Leitschaufeln 5 bzw. den Anströmflächen 9 ein entsprechender Staudruck aufbaut. Zur Gewährleistung einer intensiven Strömungsablenkung und damit auch einer effizienten Reinigung von Abgasen ist es vorteilhaft, wenn die Leitschaufeln mit einem Versatz 16 von 10 mm bis 20 mm ausgeführt sind.

Von besonderem Interesse bezüglich der Ausgestaltung der Leitschaufeln 5 ist, dass die Anströmflächen 9 der zueinander versetzt in benachbarten Kanälen 2 angeordneten Leitschaufeln 5 die gleiche Ausrichtung aufweisen. Mit anderen Worten heißt das mit Bezug auf die Darstellung in Fig. 1, dass die weiter links abgebildeten Leitschaufeln 5 eine Anströmfläche 9 haben, die von unten links nach oben rechts ausgerichtet ist. Die gleiche Ausrichtung, nämlich von unten links nach oben rechts, weisen auch die in den benachbarten Kanälen 2 dazu versetzt angeordneten Leitschaufeln 5 auf. Betrachtet man nun die nach unten gedrückten Leitschaufeln 5, so bilden diese jeweils einen Durchlass 6 für die benachbarten Kanäle, wobei diese Durchlässe 6 einen sich verjüngenden Querschnitt aufweisen. Durch die gleichartige Ausrichtung der Anströmflächen 9 der Leitschaufeln 5 wird erreicht, dass der sich verjüngende Anteil des Querschnitts hin zur benachbarten Leitschaufel 5 ausgerichtet ist. Die Wirkung dieser Anordnung soll nun unter Bezugnahme auf Fig. 2 veranschaulicht werden.

Dazu zeigt Fig. 2 dieselbe Anordnung der Wandlage 3 aus Fig. 1. Zusätzlich ist ein Teilbereich einer Filterlage 4 dargestellt, der im Wesentlichen auf den Wellenbergen der Wandlage 3 anliegt. Für einen Kanal 2 sind nun beispielhaft die Strömungsbedingungen durch entsprechende Pfeile veranschaulicht. Das in den Kanal 2 einströmende Abgas trifft auf die darin befindliche Leitschaufel 5, die jedoch einen Strömungswiderstand darstellt. Dies führt zu einem Staudruck in einem vorgelagerten Kanalbereich, welcher zur Folge hat, dass ein Großteil des Abgases durch die Filterlage 4 hindurchtritt, was mittels einen Filterstrom 24 charakterisierenden Pfeilen veranschaulicht wurde. Der Nebenstromfilter 1 erzeugt jedoch nicht nur einen Filterstrom 24 sondern erlaubt auch ein Vorbeiströmen von Teilabgasströmen, wobei dies einerseits vorbei an der Leitschaufel 5 selbst erfolgen kann, der so genannte Bypassstrom 25, oder aber durch Entweichen aus einem Kanal 2 in einen benachbarten Kanal über die Durchlässe 6 (so genannter Nebenstrom 26). Durch die erfindungsgemäß beschriebene Ausgestaltung des Durchlasses 6 bzw. der gleichen Ausrichtung der Anströmflächen 9 kann der Staudruck über einen größeren Kanalbereich aufrechterhalten werden, wobei gleichzeitig die Abstände bzw. der Versatz zur benachbarten Leitschaufeln beibehalten wird. Dies führt zu einer überraschend hohen Steigerung der Effektivität eines solchen Nebenstromfilters.

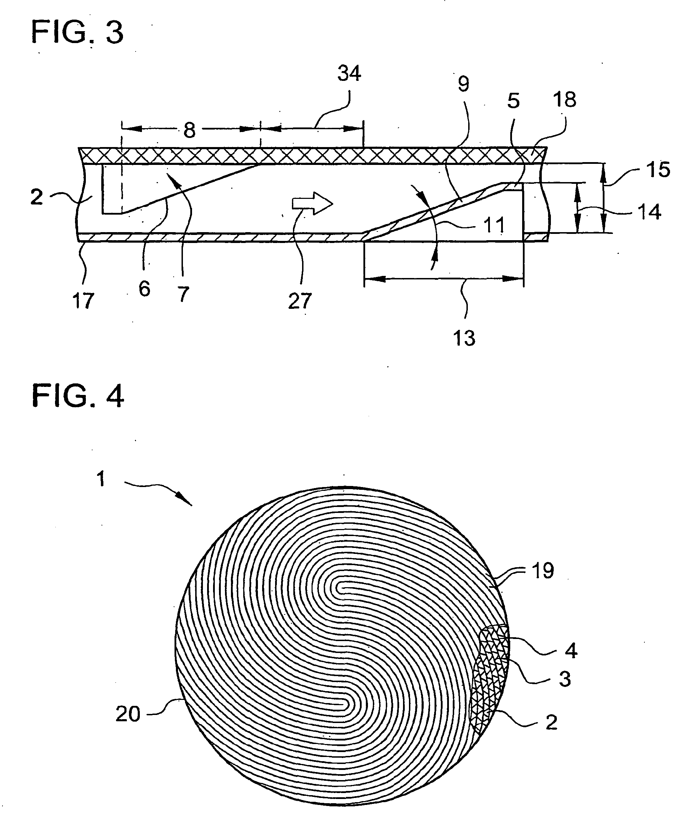

In Fig. 3 wird noch einmal schematisch anhand einer im Schnitt dargestellten Detailansicht eine weitere Ausführungsvariante des Nebenstromfilters 1 beschrieben. Gezeigt ist ein Kanal 2, der mit einer strukturierten Metallfolie 17 und einem Drahtgestrick 18 begrenzt ist. Die Metallfolie 17 ist mit einer Leitschaufel 5 veranschaulicht, die eine Anströmfläche 9 aufweist. Die Anströmfläche 9 ist bevorzugt mit einem Winkel 11 zur Kanalachse 12 im Bereich von vorteilhafter Weise 5° bis 25 ° ausgebildet, wobei diese gleichzeitig eine Länge 13 im Bereich von 4 mm bis 8 mm hat, so dass letztendlich eine Höhe 14 vorliegt, die im Bereich von 70 % bis 100 % der Kanalweite 15 ausgeführt ist. Damit wird der Kanalquerschnitt deutlich eingeengt, so dass eine Ableitung des sonst in Strömungsrichtung 27 strömenden Abgases bewirkt wird. Entgegen der Strömungsrichtung 27, dass heißt vorgelagert dazu, ist nun ein Durchlass 6 hin zu einem benachbarten Kanal vorgesehen. Dieser Durchlass 6, der beispielsweise mit einer entsprechenden Leitschaufel im Wellenberg ausgeführt ist, hat einen sich verjüngenden Querschnitt 7, wobei der sich verjüngende Anteil 8 des Querschnitts 7 hin zur benachbarten, rechts dargestellten, in Strömungsrichtung 27 folgenden, Leitschaufel 5 ausgerichtet ist. Vorteilhafterweise sind der Durchlass 6 und die entsprechende Leitschaufel 5 über eine Erstreckung 34 von nicht aber mehr als 10 mm, bevorzugt im Bereich von 2 bis 6 mm, beabstandet.

Die Ausrichtung des sich verjüngenden Anteils 8 des Durchlasses 6 hin zur veranschaulichten Leitschaufel 5 führt dazu, dass der vor der Leitschaufel 5 aufgebaute Staudruck nur "langsam" zusammenbricht, so dass ein größerer Bereich des Drahtgestricks 18 zur Filterung des Abgases benutzt werden kann. Damit kann eine wesentliche Effektivitätssteigerung des Nebenstromfilters bewirkt werden. Fig. 4 zeigt in einer stirnseitigen, schematischen Ansicht eine Ausführungsvariante eines Nebenstromfilters 1. Dieser umfasst eine Mehrzahl von Schichten 19, die jeweils eine Wandlage 3 und eine Filterlage 4 zur Bildung einer Mehrzahl von Kanälen 2 umfassen. Diese Schichten 19 sind zumindest teilweise im Wesentlichen S-förmig miteinander verwunden und an ihren Enden am Gehäuse 20 fügetechnisch verbunden, insbesondere verlötet. Durch das beidendige Befestigen der Schichten 19 wird ein besonders stabiler Nebenstromfilter 1 erzeugt, der auch hohen thermischen und dynamischen Wechselbelastungen standhält.

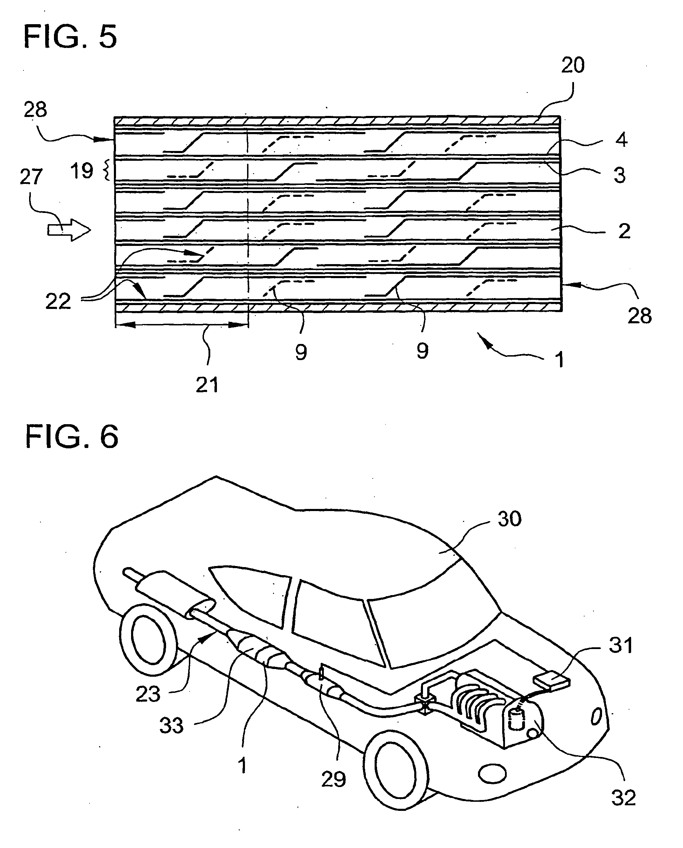

In Fig. 5 ist eine Schnittansicht einer weiteren Ausführungsform eines Nebenstromfilters 1 veranschaulicht. Der Nebenstromfilter 1, der eine Mehrzahl von Schichten 19 aus Wandlage 3 und Filterlage 4 zur Bildung von einer Vielzahl von Kanälen 2 umfasst, ist wiederum in einem Gehäuse 20 angeordnet. Das in Strömungsrichtung 27 anströmende Abgas trifft zunächst auf die links dargestellte Stirnseite 28 auf und wird in viele Teile Abgasströme zerteilt und durch die Kanäle 2 hindurchgeführt. Infolge der in den Kanälen 2 angeordneten Leitschaufeln 5 mit den entsprechend ausgerichteten Anströmflächen 9 erfolgt eine Ablenkung der Teilabgasströme, so dass diese durch die Filterlage 4 hindurch gezwungen werden, wobei eine vollständige Verschließung eines Kanals 2 nicht vorliegt.

Bei der veranschaulichten Ausführungsvariante ist der Nebenstromfilter 1 mit einem Teilbereich 21 ausgeführt, wobei dort die Wandlagen und die Filterlagen mit einer katalytisch aktive Beschichtung 22 ausgeführt sind. Es ist besonders bevorzugt, dass diese Beschichtung 22 einen Edelmetall-Katalysator umfasst, so dass hier beispielsweise nach Art einer "continuous regeneration trap" (CRT) die Bildung von Stickstoffdioxid gefördert wird, die im nachfolgenden Teilabschnitt des Nebenstromfilters 1 eine Umwandlung der eingefangenen Russpartikel hin zu Kohlendioxid bereits bei niedrigen Temperaturen von ca. 600°C begünstigt.

Fig. 6 zeigt schließlich noch ein Fahrzeug 30, dass mit einem vorstehend beschriebnen Nebenstromfilter 1 ausgeführt ist. Die Verbrennungskraftmaschine 32 (insbesondere ein Otto- oder ein Dieselmotor) generiert dabei in Abhängigkeit von einer Motorsteuerung 31 Abgas unterschiedlicher Zusammensetzungen, das über eine Abgasanlage 23 geführt wird. In dem hier veranschaulichten Beispiel wird das Abgas zunächst über einen Oxidationskatalysator 29 zur Bildung von Stickstoffdioxiden geleitet, bevor es in ein stromabwärts angeordneten Nebenstromfilter 1 hindurchgeführt wird, wobei die Russpartikel eingefangen und mit Hilfe des zuvor generierten Stickstoffdioxids umgesetzt werden. Das Abgas kann anschließend noch weiteren Abgasbehandlungseinheiten 32 zugeführt werden, so dass auch eine Umsetzung weiterer Schadstoffkomponenten des Abgases bewirkt wird, bevor es schließlich an die Umgebung abgegeben wird.

Die hier vorgeschlagene Ausgestaltung des Nebenstromfilters hat eine signifikante Erhöhung der Effektivität zur Folge.

### Bezugszeichenliste

- 1: Nebenstromfilter
- 2: Kanal
- 3: Wandlage
- 4: Filterlage
- 5: Leitschaufeln
- 6: Durchlass
- 7: Querschnitt
- 8: verjüngender Anteil
- 9: Anströmfläche
- 10: Extremum
- 11: Winkel
- 12: Kanalachse
- 13: Länge
- 14: Höhe
- 15: Kanalweite
- 16: Versatz
- 17: Metallfolie
- 18: Drahtgestrick
- 19: Schicht
- 20: Gehäuse
- 21: Teilbereich
- 22: Beschichtung
- 23: Abgasanlage
- 24: Filterstrom
- 25: Bypassstrom
- 26: Nebenstrom
- 27: Strömungsrichtung
- 28: Stirnseite
- 29: Oxidationskatalysator
- 30: Fahrzeug
- 31: Motorsteuerung
- 32: Verbrennungskraftmaschine
- 33: Abgasbehandlungseinheit
- 34: Erstreckung
- 35: Wellenberg
- 36: Wellental

## Patentansprüche

1. Nebenstromfilter (1) aufweisend eine Mehrzahl nebeneinander angeordneter Kanäle (2), die mit wenigstens einer strukturierten Wandlage (3) und einer Filterlage (4) gebildet sind, wobei in zumindest der Mehrzahl der Kanäle (2) jeweils mehrere Leitschaufeln (5) zur Ausbildung eines Staudrucks im vorgelagerten Kanalbereich mit einer Anströmfläche (9) und jeweils mit der Wandlage (3) gebildete Durchlässe (6) zum Entweichen von Teilabgasströmen in einen benachbarten Kanal (2) und zum Vorbeiströmen von den Teilabgasströmen an der Filterlage (4) hin zum benachbarten Kanal (2) vorgesehen sind, wobei in benachbarten Kanälen (2), die über Durchlässe (6) miteinander verbunden sind, in Strömungsrichtung (27) zueinander versetzte Leitschaufeln (5) mit der gleichen Ausrichtung der Anströmflächen (9) angeordnet sind.

2. Nebenstromfilter (1) nach einem der vorhergehenden Patentansprüche, wobei die Durchlässe (6) mit im benachbarten Kanal (2) angeordneten Leitschaufeln (5) aufweisend eine Anströmfläche (9) gebildet sind, **dadurch gekennzeichnet, dass** die zueinander in Strömungsrichtung (27) versetzten Leitschaufeln (5) in benachbarten Extrema (10) der Wandlage (3) angeordnet sind.

3. Nebenstromfilter (1) nach einem der vorhergehenden Patentansprüche, wobei die Durchlässe mit Leitschaufeln aufweisend eine Anströmfläche gebildet sind, **dadurch gekennzeichnet, dass** die Anströmflächen (9) mit einem Winkel (11) bis 45° zu einer Kanalachse (12) ausgeführt sind.

4. Nebenstromfilter (1) nach einem der vorhergehenden Patentansprüche, wobei die Durchlässe mit Leitschaufeln aufweisend eine Anströmfläche gebildet sind, **dadurch gekennzeichnet, dass** die Anströmflächen (9) mit einer Länge (13) von 3 mm bis 8 mm ausgeführt sind.

5. Nebenstromfilter (1) nach einem der vorhergehenden Patentansprüche, wobei die Durchlässe mit Leitschaufeln aufweisend eine Anströmfläche gebildet sind, **dadurch gekennzeichnet, dass** die Anströmflächen (9) mit einer Höhe (14) von 50 % bis 100 % der jeweiligen Kanalweite (15) ausgeführt sind.

6. Nebenstromfilter (1) nach einem der vorhergehenden Patentansprüche, wobei die Durchlässe mit Leitschaufeln aufweisend eine Anströmfläche gebildet sind, **dadurch gekennzeichnet, dass** die benachbarten Leitschaufeln (5) mit einem Versatz (16) in Richtung der Kanalachse (12) von mindestens 10 mm ausgeführt sind.

7. Nebenstromfilter (1) nach einem der vorhergehenden Patentansprüche, **dadurch gekennzeichnet, dass** mindestens 6 Leitschaufeln (5) in einem Kanal (2) vorgesehen sind.

8. Nebenstromfilter (1) nach einem der vorhergehenden Patentansprüche, **dadurch gekennzeichnet, dass** die strukturierte Wandlage (3) eine Metallfolie (17) und die Filterlage (4) ein metallisches Drahtgestrick (18) ist.

9. Nebenstromfilter (1) nach einem der vorhergehenden Patentansprüche, **dadurch gekennzeichnet, dass** mehrere Schichten (19) umfassend eine Wandlage (3) und eine Filterlage (4) miteinander verwunden in einem Gehäuse (20) angeordnet sind.

10. Nebenstromfilter (1) nach einem der vorhergehenden Patentansprüche, **dadurch gekennzeichnet, dass** zumindest ein Teilbereich (21) wenigstens der Wandlage (3) oder der Filterlage (4) eine katalytisch aktive Beschichtung (22) aufweist.

11. Abgasanlage (23) eines Fahrzeugs (30) aufweisend einen Nebenstromfilter (1) nach einem der vorhergehenden Patentansprüche.

12. Fahrzeug (30) aufweisend einen Nebenstromfilter (1) nach einem der vorhergehenden Patentansprüche 1 bis 10.

## Claims

1. Bypass flow filter (1) having a majority of juxtaposed channels (2), which are formed with at least a structured wall layer (3) and a filter layer (4), wherein in at least the majority of the channels (2) in each case several guide vanes (5) for building up a dynamic pressure in an upstream channel region having a leading face (9) are provided and in each case passages (6) formed by the wall layer (3) are provided for allowing exhaust flow portions to escape into an adjacent channel (2) and for allowing exhaust flow portions to pass the filter layer (4) in the direction of the adjacent channel (2), wherein in adjacent channels (2) being connected to each other via passages (6) guide vanes (5), that are disposed offset with respect to one another in adjacent channels (2), have the same orientation of the leading faces (9).

2. Bypass flow filter (1) according to one of the preceding claims, wherein the passages (6) are formed with guide vanes (5) arranged in the adjacent channel (2) having a leading face (9), **characterized in that** the guide vanes (5) that are offset with respect to one another are arranged in adjacent extremities (10) of the wall layer (3).

3. Bypass flow filter (1) according to one of the preceding claims, wherein the passages are formed with guide vanes having a leading face, **characterized in that** the leading faces (9) are disposed at an angle (11) of up to 45° with respect to a channel axis (12).

4. Bypass flow filter (1) according to one of the preceding claims, wherein the passages are formed with guide vanes having a leading face, **characterized in that** the leading faces (9) have a length (13) of from 3 mm to 8 mm.

5. Bypass flow filter (1) according to one of the preceding claims, wherein the passages are formed with guide vanes having a leading face, **characterized in that** the leading faces (9) have a height (14) of from 50% to 100% of a respective channel width (15).

6. Bypass flow filter (1) according to one of the preceding claims, wherein the passages are formed with guide vanes having a leading face, **characterized in that** the adjacent guide vanes (5) have an offset (16) of at least 10 mm in the direction of the channel axis (12).

7. Bypass flow filter (1) according to one of the preceding claims, **characterized in that** at least 6 guide vanes (5) are provided in a channel (2).

8. Bypass flow filter (1) according to one of the preceding claims, **characterized in that** the structured wall layer (3) is a metal foil (17), and the filter layer (4) is a metallic wire fabric (18).

9. Bypass flow filter (1) according to one of the preceding claims, **characterized in that** several layers (19) comprising a wall layer (3) and a filter layer (4) are wound up together in a housing (20).

10. Bypass flow filter (1) according to one of the preceding claims, **characterized in that** at least a partial region (21) of at least the wall layer (3) or the filter layer (4) has a catalytically active coating (22).

11. Exhaust gas system (23) of a vehicle (30), having a bypass flow filter (1) according to one of the preceding claims.

12. Vehicle (30) having a bypass flow filter (1) according to one of the preceding claims 1 to 10.

## Revendications

1. Filtre à flux secondaire (1) comportant une pluralité de canaux (2) juxtaposés, qui sont formés avec au moins une couche de paroi structurée (3) et une couche de filtre (4), dans le cas duquel dans au moins la pluralité des canaux (2) respectivement une pluralité d'aubes directrices (5) pour réaliser une pression dynamique dans la région frontale des canaux avec une face d'afflux (9) et avec des passages (6), dont chacun est formé avec la couche de paroi (3), pour que les flux de gaz d'échappement partiels puissent s'échapper dans un canal adjacent (2) et pour que les flux de gaz d'échappement partiels puissent s'écouler à coté de la couche de filtre (4) vers le canal juxtaposé (2), sont prévus, dans le cas duquel dans des canaux juxtaposés (2) qui sont connectés les uns aux autres par des passages (6), des aubes directrices (5), décalées les unes aux autres dans le sens d'écoulement (27) et ayant la même orientation que les faces d'afflux (9).

2. Filtre à flux secondaire (1) selon l'une des revendications précédentes, dans le cas duquel les passages (6) sont formés avec des aubes directrices (5) agencées dans le canal adjacent (2) et ayant une face d'afflux (9), **caractérisé en ce que** les aubes directrices (5) décalées les unes aux autres dans le sens d'écoulement (27) sont agencées dans des extrémités juxtaposées (10) de la couche de paroi (3).

3. Filtre à flux secondaire (1) selon l'une des revendications précédentes, dans le cas duquel les passages sont formés avec des aubes directrices ayant une face d'afflux, **caractérisé en ce que** les faces d'afflux (9) sont réalisées avec un angle (11) jusqu'à 45° par rapport à un axe de canal (12).

4. Filtre à flux secondaire (1) selon l'une des revendications précédentes, dans le cas duquel les passages sont formés avec des aubes directrices comportant une face d'afflux, **caractérisé en ce que** les faces d'afflux (9) sont réalisées avec une longueur (13) de 3 mm à 8 mm.

5. Filtre à flux secondaire (1) selon l'une des revendications précédentes, dans le cas duquel les passages sont réalisés avec des aubes directrices étant dotées d'une face d'afflux, **caractérisé en ce que** les faces d'afflux (9) sont réalisées avec une hauteur (14) de 50 % à 100 % de la largeur de canal (15) respective.

6. Filtre à flux secondaire (1) selon l'une des revendications précédentes, dans le cas duquel les passages sont réalisés avec des aubes directrices étant dotées d'une face d'afflux, **caractérisé en ce que** les aubes directrices adjacentes (5) sont réalisées avec un décalage (16) en direction de l'axe de canal (12) d'au moins 10 mm.

7. Filtre à flux secondaire (1) selon l'une des revendications précédentes, **caractérisé en ce que** dans un canal (2) au moins 6 aubes directrices (5) sont prévues dans un canal (2).

8. Filtre à flux secondaire (1) selon l'une des revendications précédentes, **caractérisé en ce que** la couche de paroi structurée (3) est une feuille métallique (17) et la couche de filtre (4) un tricotage en fil métallique (18).

9. Filtre à flux secondaire (1) selon l'une des revendications précédentes, **caractérisé en ce qu'**une pluralité de couches (19), comprenant une couche de paroi (3) et une couche de filtre (4) sont agencées dans un boîtier (20) tout en étant entrelacées.

10. Filtre à flux secondaire (1) selon l'une des revendications précédentes, **caractérisé en ce qu'**au moins une région partielle (21) d'au moins la couche de paroi (3) ou de la couche de filtre (4) a un revêtement (22) à activité catalytique.

11. Installation de gaz d'échappement (23) d'un véhicule (30) comprenant un filtre à flux secondaire (1) selon l'une des revendications précédentes.

12. Véhicule (30) ayant un filtre à flux secondaire (1) selon l'une des revendications précédentes 1 à 10.
